# FASCICULE DE BREVET EUROPEEN

(11) **EP 2 688 166 B1**
(45) Date de publication et mention de la délivrance du brevet: **05.11.2014**
(21) Numéro de dépôt: 13305804.0
(22) Date de dépôt: 14.06.2013
(51) Int. Cl.: H02G 3/00

(54) **Accessoire de connexion de deux tronçons d'un longeron d'une ossature de paroi creuse**
Zubehörteil zum Verbinden von zwei Endstücken eines Längsträgers eines Hohlwandtragwerks
Accessory for connecting two sections of a side rail of a hollow wall frame

(30) Priorité: 20.07.2012 FR 1202073
(43) Date de publication de la demande: 22.01.2014
(73) Titulaire: Legrand France, 87000 Limoges (FR); Legrand SNC, 87000 Limoges (FR)
(72) Inventeur: Maziere, Laurent, 87220 FEYTIAT (FR)
(74) Mandataire: Orsini, Fabienne

(56) Documents cités:
- EP-A1- 1 207 605
- EP-B1- 2 132 846

## Description

### DOMAINE TECHNIQUE AUQUEL SE RAPPORTE L'INVENTION

La présente invention concerne de manière générale le montage de conduits de cheminement d'éléments conducteurs cachés à l'intérieur de cloisons creuses.

Elle concerne plus particulièrement un accessoire pour ossature de cloison creuse facilitant ce montage de conduits.

L'invention trouve une application particulièrement avantageuse dans la réalisation d'accessoires de connexion pour le montage de conduits électriques transportant des gaines ou des conducteurs électriques, cachés à l'intérieur d'une cloison creuse.

### ARRIERE-PLAN TECHNOLOGIQUE

Les cloisons creuses comportent généralement une structure métallique comportant, d'une part, deux rails horizontaux respectivement fixés au plafond et au sol, et, d'autre part, une pluralité de montants verticaux qui s'étendent entre les deux rails horizontaux.

Ces cloisons creuses comportent également des panneaux de fermeture, généralement en plâtre, vissés sur la structure métallique.

Lorsqu'il s'agit de cloisons de séparation, les panneaux de fermeture sont rapportés de part et d'autre de la structure métallique. En revanche, lorsqu'il s'agit de cloisons de doublage, la structure métallique s'appuie par un de ses côtés sur un mur en béton ou en parpaings (ou est située à distance réduite de ce mur) et les panneaux de fermeture sont rapportés uniquement sur l'autre côté de la structure métallique.

Si ces cloisons creuses sont faciles à installer, le câblage des appareillages (prise de courant fort ou faible, interrupteurs, prises VDI, prises de téléphone, prises Ethernet ...) fixés sur les panneaux s'avère en revanche beaucoup plus délicat.

Les montants verticaux et les rails horizontaux de l'ossature métallique forment en effet autant d'obstacles qui ne permettent pas de tirer des câbles électriques à l'intérieur de la cloison.

Une solution connue du document EP2132846 consiste alors à fixer les extrémités basses des montants verticaux sur le rail horizontal fixé au sol par l'intermédiaire de pieds en partie évidés. Ainsi, l'installateur peut tirer des câbles le long du rail horizontal fixé au sol, au travers des évidements délimités par les pieds.

L'inconvénient majeur de cette solution technique est qu'elle ne permet pas de faire naviguer les fils électriques à la hauteur souhaitée, notamment à la hauteur des appareillages fixés aux panneaux. Le câblage de ces appareillages s'avère alors fastidieux puisqu'il nécessite de tirer des gaines électriques depuis le rail horizontal fixé au sol jusqu'à ces appareillages.

Une autre solution connue du document EP1207605 consiste à prévoir des montants verticaux qui présentent, sur une partie de leur longueur, une moindre épaisseur pour permettre le passage d'un conduit de câbles. Une telle solution est peu satisfaisante notamment car elle réduit la rigidité de l'ossature de la cloison creuse.

### OBJET DE L'INVENTION

Afin de remédier à l'inconvénient précité de l'état de la technique, la présente invention propose un accessoire pouvant être interposé entre deux tronçons d'un même montant vertical de l'ossature métallique de la cloison creuse afin de permettre le passage d'éléments conducteurs à la hauteur de cet accessoire.

Plus particulièrement, on propose selon l'invention un accessoire de connexion tel que défini dans la revendication 1.

Selon l'invention, les deux parties d'extrémité de l'accessoire permettent de lier entre eux les deux tronçons du longeron, tandis que la partie centrale permet de faire passer les éléments conducteurs au travers du longeron.

Cet accessoire peut ainsi être fixé à la hauteur souhaitée sur le longeron, notamment à la hauteur des appareillages fixés aux panneaux de la cloison creuse afin de faciliter le raccordement de ces derniers au réseau d'alimentation.

D'autres caractéristiques avantageuses et non limitatives de l'accessoire de connexion conforme à l'invention sont définies dans les revendications 2 à 15.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'une partie d'une cloison creuse, comportant un accessoire de connexion selon un premier mode de réalisation de l'invention, un montant métallique et une goulotte encastrée,
- la figure 2 est une vue schématique en perspective assemblée des éléments représentés sur la figure 1 ;
- la figure 3 est une vue schématique en perspective semi-éclatée de deux accessoires de connexion selon un second mode de réalisation de l'invention, de deux montants métalliques et d'une goulotte encastrée ;
- la figure 4 est une vue schématique en perspective éclatée de deux accessoires de connexion selon un troisième mode de réalisation de l'invention, de deux montants métalliques et d'une goulotte encastrée ;
- la figure 5 est une vue schématique en perspective éclatée de la goulotte, de l'un des longerons et de l'un des accessoires de connexion de la figure 4, représentés sous un angle différent ;
- la figure 6 est une vue schématique en perspective assemblée des deux accessoires de connexion, des deux montants métalliques et de la goulotte de la figure 4 ;
- la figure 7 est une vue schématique en perspective éclatée de deux accessoires de connexion selon un quatrième mode de réalisation de l'invention, de deux montants métalliques et de deux goulottes encastrées ;
- la figure 8 est une vue schématique en perspective éclatée de deux accessoires de connexion selon un cinquième mode de réalisation de l'invention, et d'une goulotte encastrée ;
- la figure 9 est une vue schématique en perspective éclatée de deux accessoires de connexion selon un sixième mode de réalisation de l'invention, et d'un premier conduit de câble ;
- la figure 10 est une vue schématique en perspective éclatée des deux accessoires de connexion de la figure 9, de deux montants métalliques et d'un deuxième conduit de câble ;
- la figure 11 est une vue schématique en perspective éclatée de trois accessoires de connexion selon un septième mode de réalisation de l'invention, et d'un troisième conduit de câble ;
- la figure 12 est une vue schématique en perspective éclatée d'un accessoire de connexion selon un huitième mode de réalisation de l'invention, d'un montant métallique et d'une goulotte partiellement en saillie ;
- la figure 13 est une vue schématique en perspective éclatée d'un accessoire de connexion selon un neuvième mode de réalisation de l'invention, d'un montant métallique et de deux goulottes partiellement en saillie ;
- la figure 14 est une vue schématique en perspective assemblée d'un accessoire de connexion selon un dixième mode de réalisation de l'invention, de deux montants en bois et d'un quatrième conduit de câble ;
- la figure 15 est une vue schématique en perspective éclatée d'un accessoire de connexion selon un onzième mode de réalisation de l'invention ; et
- la figure 16 est une vue schématique en perspective assemblée de l'accessoire de connexion de la figure 15.

Des panneaux de fermeture en plâtre ou en bois, tels que les panneaux commercialisés sous la marque Placoplatre® BA 13, sont généralement utilisés dans les bâtiments pour créer des cloisons de séparation ou pour doubler des parois existantes.

Pour les installer, on utilise une ossature métallique ou en bois que l'on fixe au sol et au plafond.

Lorsqu'il s'agit de créer une cloison de séparation, l'ossature est alors recouverte de panneaux de fermeture sur ses deux côtés, tandis que lorsqu'il s'agit de couvrir une paroi préexistante avec une cloison de doublage, l'ossature n'est recouverte de panneaux de fermeture que sur un seul de ses deux côtés.

Quoi qu'il en soit, cette ossature et ces panneaux forment alors ensemble une « cloison creuse ».

Dans la description, les termes « avant » et « arrière » seront alors utilisés par rapport à cette cloison creuse. Ainsi, pour une cloison de doublage, l'arrière désignera le côté tourné vers la paroi préexistante tandis que l'avant désignera le côté opposé. Au contraire, pour une cloison de séparation, l'arrière et l'avant désigneront les deux côtés de cette cloison creuse.

Par ailleurs, l'expression « section transversale » sera utilisée en relation avec des éléments qui seront allongés suivant des axes longitudinaux (tels que des poutrelles profilées) pour décrire leurs sections dans des plans orthogonaux à leurs axes longitudinaux.

L'ossature, lorsqu'elle est métallique, est généralement constituée de deux types de longerons (ou « poutrelles »), à savoir de rails horizontaux fixés au sol et au plafond, et de montants verticaux fixés aux rails horizontaux.

Les panneaux, lorsqu'ils sont en plâtre, sont alors fixés à cette ossature métallique au moyen de vis auto-perceuses adaptées à traverser les panneaux et à se visser dans les longerons.

Pour installer à l'intérieur de la cloison creuse des éléments conducteurs tels que des câbles électriques, des fils électriques, des fibres optiques, des conduits d'air ou des conduits d'eau, l'invention propose de couper chaque montant vertical en deux tronçons afin d'ouvrir entre ces deux tronçons un passage pour les éléments conducteurs.

Plus précisément, la présente invention propose un accessoire de connexion 100 ; 200 ; 300 ; 400 ; 500 ; 600 ; 700 ; 800 ; 900 ; 1000 ; 1100 de deux tronçons 11, 12; 11A, 12A; 11B; 12B d'un longeron 10; 10A ; 10B d'une ossature de paroi creuse, comportant :
- une partie centrale 110; 210; 310; 410; 510; 610 ; 710; 810; 910; 1010 ; 1110 qui délimite au moins un passage 111 ; 211 ; 311 ; 411 ; 511 ; 611 ; 711 ; 811 ; 911A, 911 B ; 1011 ; 1113 d'élément conducteur, et
- deux parties d'extrémité 120 ; 220 ; 320 ; 420 ; 520 ; 620 ; 720 ; 820 ; 920 ; 1020 ; 1120 qui s'étendent de part et d'autre de la partie centrale 110 ; 210 ; 310; 410; 510 ; 610 ; 710 ; 810 ; 910 ; 1010 ; 1110 et qui sont respectivement adaptées à immobiliser les deux tronçons 11, 12 ; 11A, 12A ; 11B ; 12B du longeron 10 ; 10A ; 10B dans l'axe l'un de l'autre.

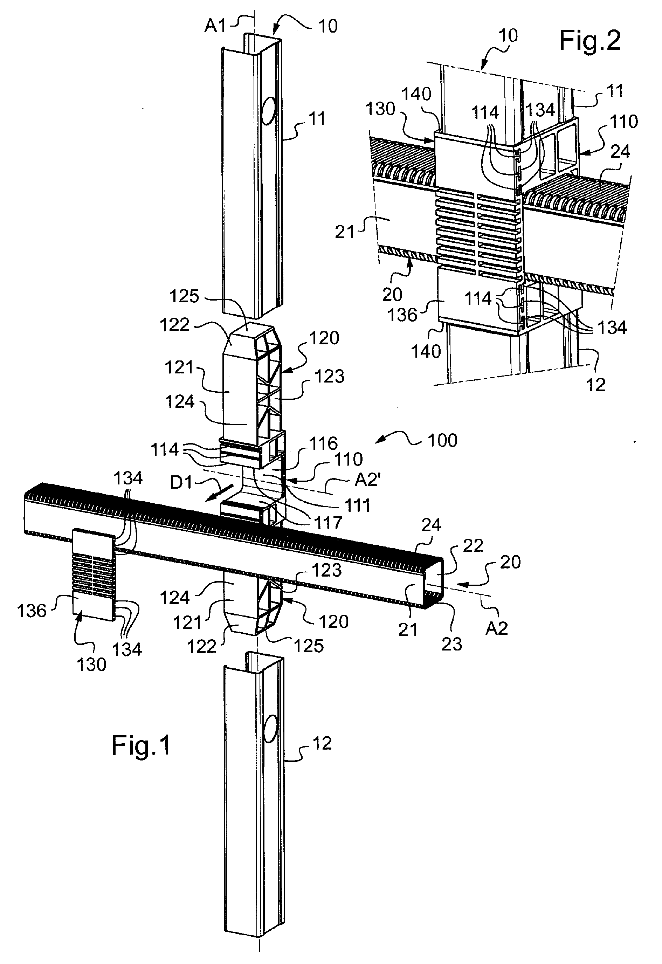

Sur les figures 1 à 16, on a représenté onze modes de réalisation de cet accessoire de connexion.

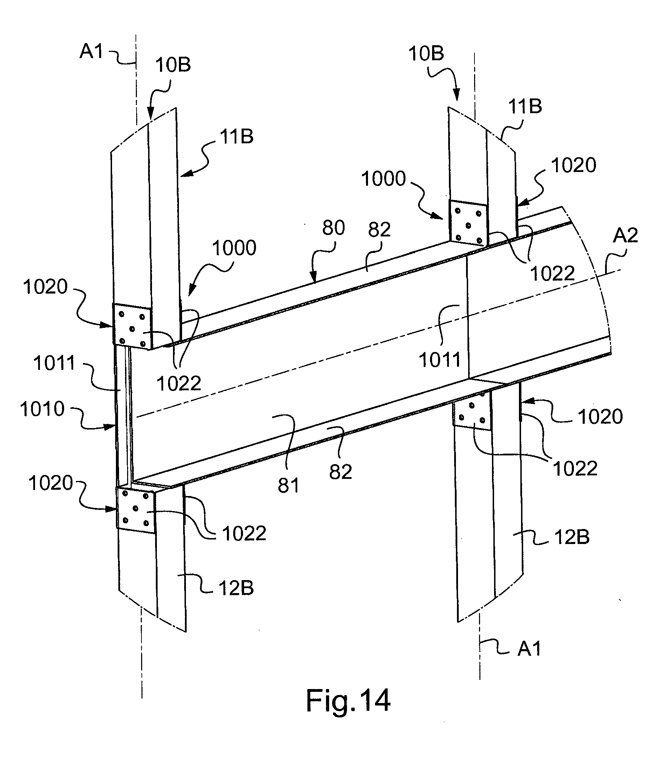

Dans les modes de réalisation représentés sur les figures 1 à 13 et 15 et 16, cet accessoire de connexion est réalisé en matière plastique ou synthétique et est adapté à s'interposer entre deux tronçons d'un montant vertical en matière métallique. Dans le mode de réalisation représenté sur la figure 14, cet accessoire de connexion est réalisé en matière métallique et est adapté à s'interposer entre deux tronçons d'un montant vertical en bois.

Selon le premier mode de réalisation représenté sur les figures 1 et 2, cet accessoire de connexion 100 est agencé pour s'interposer entre deux tronçons 11, 12 d'un montant vertical 10, et pour permettre le passage transversal d'une goulotte 20 de cheminement d'éléments conducteurs entre ces deux tronçons 11, 12.

Ici, ce montant vertical 10 est du type commercialisé sous la marque Placo® Stil®. Il se présente donc sous la forme d'un profilé allongé suivant un axe longitudinal A1, de section transversale en C. Ce montant vertical 10 comporte ainsi un fond dont les deux bords sont repliés à angle droit pour former deux ailes, les bords de ces ailes étant également repliés à angle droit, l'un vers l'autre.

La goulotte 20 se présente donc sous la forme d'un profilé allongé suivant un axe longitudinal A2, de section transversale carrée. Telle qu'elle est représentée sur la figure 1, cette goulotte 20 présente deux parois avant 21 et arrière 22 pleines, et deux parois supérieure 24 et inférieure 23 ajourées.

Ces deux parois supérieure 24 et inférieure 23 présentent une pluralité de fentes rectilignes juxtaposées, d'axes orthogonaux à l'axe longitudinal A2. Ces fentes sont régulièrement réparties le long des parois supérieure 24 et inférieure 23, à distance réduite les unes des autres, pour délimiter entre elles des languettes sécables.

Selon ce premier mode de réalisation, l'accessoire de connexion 100 est formé d'une seule pièce monobloc.

La partie centrale 110 de cet accessoire de connexion 100 présente plus précisément ici une forme de U, avec une paroi de fond 116 rectangulaire et deux parois supérieure et inférieure 117 rectangulaires qui s'étendent à partir de deux bords opposés du fond 116, orthogonalement à celui-ci.

La paroi de fond 116 et les parois supérieure et inférieure 117 sont ici creuses et comportent intérieurement des nervures de rigidification.

Lesdites parois 116, 117 délimitent entre elles un unique passage 111 traversant suivant un axe A2'. Ce passage 111 présente une section transversale à l'axe A2' dont les dimensions sont identiques à celles de la section transversale de la goulotte 20. Ce passage 111 présente par ailleurs un contour ouvert dans une direction D1 orthogonale à l'axe A2'. Ainsi, il est possible d'y rapporter transversalement la goulotte 20.

Les deux parties d'extrémité 120 de l'accessoire de connexion 100 s'étendent quant à elles à l'opposé l'une de l'autre, à partir des faces externes opposées des deux parois supérieure et inférieure 117 de la partie centrale 110, suivant l'axe longitudinal A1.

Chaque partie d'extrémité 120 comporte une poutre principale 121 globalement parallélépipédique, et une extrémité libre 122 biseautée qui facilite l'engagement de la poutre principale 121 à l'intérieur du tronçon 11, 12 correspondant du montant vertical 10.

La poutre principale 121 est allongée suivant l'axe A1. Elle présente deux parois avant et arrière 123, 124 pleines, raccordées l'une à l'autre par des nervures de rigidification. Les deux autres parois latérales de cette poutre principale 121 sont alors simplement formées par les tranches de ces nervures de rigidification. On dit alors que la poutre principale 121 délimite une enveloppe extérieure parallélépipédique.

Cette poutre principale 121 présente une section transversale dont les dimensions sont égales, au jeu près, aux dimensions intérieures de la section transversale des tronçons 11, 12 du montant vertical 10.

De cette manière, lorsque les deux tronçons 11, 12 du montant vertical 10 sont engagés sur les deux parties d'extrémité 120 de l'accessoire de connexion 100 et que cet ensemble est positionné verticalement, en appui contre le sol, les deux tronçons 11, 12 sont immobilisés dans l'axe l'un de l'autre par l'accessoire de connexion 100.

L'extrémité libre 122 biseautée de chaque partie d'extrémité 120 prolonge continûment la poutre principale 121 et présente une forme de pyramide tronquée. Elle comporte ainsi deux parois avant et arrière pleines, raccordées l'une à l'autre par des nervures de rigidification. Elle comporte également une paroi d'extrémité 125 plane et pleine.

Avantageusement, pour fermer le passage 111 délimité par la partie centrale 110 de l'accessoire de connexion 100 après que la goulotte 20 y a été engagée, il est prévu un capot 130.

Ce capot 130 comporte une paroi frontale 136 de dimensions identiques à celles de la paroi de fond 116 de la partie centrale 110.

Cette paroi frontale 136 est rainurée sur sa face avant et est équipée sur sa face arrière de moyens de fixation 134 adaptés à se fixer à des moyens de fixation complémentaires 114 prévus aux extrémités avant des parois supérieure et inférieure 117 de la partie centrale 110.

En l'espèce, ces moyens de fixation sont formés par des coulisseaux 134 qui sont profilés suivant des axes parallèles à l'axe A2', et qui sont adaptés à coulisser dans des rails 114 formés en creux dans les extrémités avant des parois supérieure et inférieure 117 de la partie centrale 110.

Deux de ces coulisseaux 134 présentent des sections transversales en forme de T, tandis que le troisième de ces coulisseaux 134 présente une section transversale en forme de L.

Les rails 114 formés en creux dans les extrémités avant des parois supérieure et inférieure 117 de la partie centrale 110 présentent des formes correspondantes.

Les dimensions de ces rails 114 sont ajustées de telle sorte que les coulisseaux 134 du capot 130 peuvent être engagés manuellement suivant un axe parallèle à l'axe A2' dans ces rails 114, mais qu'ils ne peuvent en sortir librement sans qu'aucun effort extérieur ne soit exercé sur le capot 130.

Le montage de la cloison creuse est alors réalisé de la manière suivante.

Les rails horizontaux sont tout d'abord fixés au sol et au plafond, parallèlement l'un à l'autre et l'un au-dessus de l'autre.

Les montants verticaux 10 sont quant à eux coupés en deux tronçons 11, 12 qui sont respectivement emmanchés par l'une de leurs extrémités libres sur les deux parties d'extrémité 120 de l'accessoire de connexion 100.

Comme le montre bien la figure 2, à la jonction entre la partie centrale 110 et chaque partie d'extrémité 120 de l'accessoire de connexion 100, il est formé un trottoir 140 sur lequel l'extrémité de chaque tronçon 11, 12 vient alors en butée.

Les dimensions des parties d'extrémité 120 sont ajustées de telle sorte que les tronçons 11, 12 puissent être engagés manuellement sur ces parties d'extrémité 120 et qu'ils soient ainsi maintenus dans l'axe l'un de l'autre.

Toutefois, pour assurer un assemblage plus rigide de l'ensemble, deux vis auto-perceuses peuvent être vissées au travers de chaque tronçon 11, 12 et de chaque partie d'extrémité 120 correspondante de l'accessoire de connexion 100.

Chaque montant vertical 10, ainsi équipé d'un accessoire de connexion 100, est ensuite mis à longueur, de manière à ce qu'il puisse être installé verticalement entre les deux rails horizontaux et que ses deux extrémités libres puissent être vissées sur ces deux rails horizontaux.

Une fois l'ossature métallique de la cloison creuse mis en place, la goulotte 20 est ensuite rapportée transversalement dans les passages 111 délimités par les parties centrales 110 des accessoires de connexion 100.

A ce stade, il est alors possible de fermer le passage 111 délimité par la partie centrale 110 de chaque accessoire de connexion 100 par un capot 130, en faisant coulisser les coulisseaux 134 de ce couvercle 130 dans les rails 114 prévus dans la partie centrale 110 de cet accessoire de connexion 100.

Des éléments conducteurs sont ensuite enfilés dans la goulotte 20 pour permettre la connexion ultérieure d'appareillages, notamment des appareillages électriques tels que des prises de courant, des interrupteurs, des prises DVI....

Enfin, les panneaux de plâtre sont vissés sur les ailes des rails horizontaux et des montants verticaux, d'un côté ou des deux côtés de ces rails et montants pour masquer la goulotte 20 à l'intérieur de la cloison.

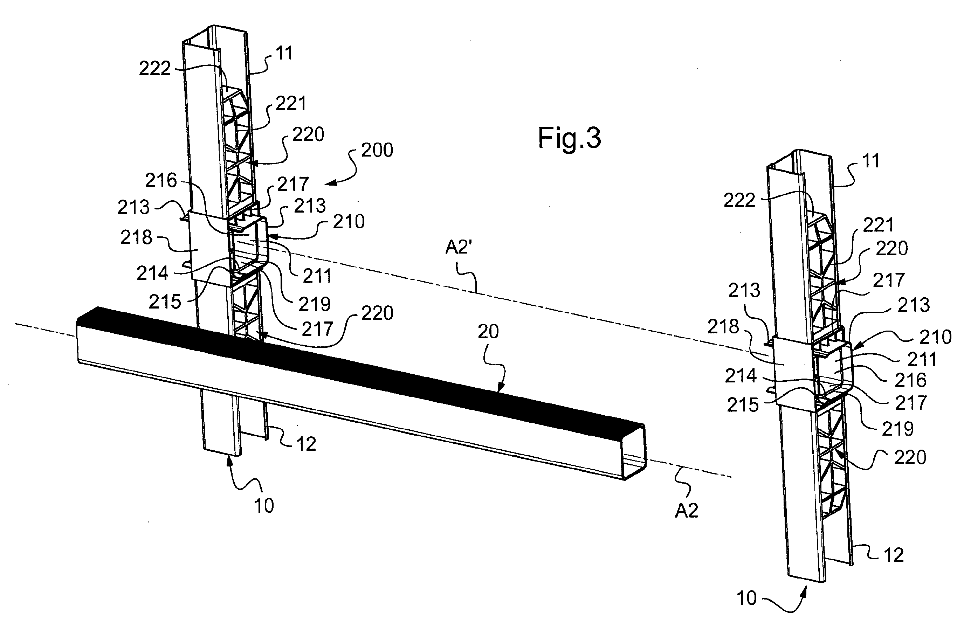

Sur la figure 3, on a représenté un deuxième mode de réalisation de l'accessoire de connexion 200.

Dans ce mode de réalisation, l'accessoire de connexion 200 est formé d'une seule pièce monobloc et est agencé pour s'interposer entre deux tronçons 11, 12 d'un montant métallique 10 identique à celui représenté sur les figures 1 et 2.

Ses deux parties d'extrémité 220 présentent donc des formes identiques à celles des parties d'extrémité 120 de l'accessoire de connexion 100 représenté sur la figure 1, avec une poutre principale 221 globalement parallélépipédique, et une extrémité libre 222 en forme de pyramide tronquée.

L'accessoire de connexion 200 est par ailleurs agencé pour permettre le passage transversal d'éléments conducteurs logés dans une goulotte 20 identique à celle représentée sur les figures 1 et 2. Il n'est en revanche pas prévu pour être traversé par cette goulotte 20.

La partie centrale 210 de cet accessoire de connexion 200 délimite à cet effet un unique passage 211 d'axe A2' qui présente un contour fermé dont les dimensions intérieures sont sensiblement égales aux dimensions intérieures de la goulotte 20.

La partie centrale 210 de l'accessoire de connexion 200 présente plus précisément ici une forme tubulaire autour de l'axe A2' de section transversale carrée. Elle présente en pratique une forme homologue de celle de la partie centrale 110 de l'accessoire de connexion 100 représenté sur la figure 1 lorsque le capot 130 y est fixé, à la différence près que le capot vient ici de formation avec le reste de la partie centrale 210.

Cette partie centrale 210 comporte ainsi une paroi de fond 216, deux parois supérieure et inférieure 217 et une paroi frontale 218.

Dans ce mode de réalisation, puisqu'il n'est pas prévu que la goulotte 20 soit engagée dans le passage 211, il est prévu de bloquer deux tronçons de goulotte 20 de chaque côté de l'accessoire de connexion 200, dans l'axe du passage 211.

L'accessoire de connexion 200 comporte à cet effet des moyens d'assujettissement 213 de ces deux tronçons de goulotte 20, ici formés par deux bords d'accostage 213 en U qui bordent les deux débouchés du passage 211 sur trois de leurs quatre côtés.

Chaque bord d'accostage 213 en U s'étend alors le long du bord de la paroi de fond 216 et des deux parois supérieure et inférieure 217 de la partie centrale 210, et s'ouvre vers la paroi frontale 218 pour permettre d'y rapporter par l'avant les extrémités des tronçons de goulotte 20.

Les deux branches du U de chaque bord d'accostage 213 s'étendent parallèlement l'une à l'autre, le long des parois supérieure et inférieure 217, depuis la paroi de fond 216 vers la paroi frontale 218. Toutefois, à proximité de la paroi frontale 218, ces deux branches se courbent de telle sorte qu'elles se rapprochent l'une de l'autre pour former un rétrécissement 214 puis qu'elles s'écartent l'une de l'autre pour former un élargissement 215.

L'élargissement 215 délimite ainsi une rampe d'accès permettant de faciliter l'engagement par l'avant de l'extrémité du tronçon de goulotte 20 sur l'accessoire de connexion 200, tandis que le rétrécissement 214 permet d'encliqueter cette extrémité dans le logement délimité par le bord d'accostage 213 de l'accessoire de connexion 200, de telle manière qu'il reste bloqué dans le prolongement du passage 211.

Comme le montre bien la figure 3, chaque bord d'accostage 213 forme, à sa jonction avec la partie centrale 210, un trottoir 219 qui permet de bloquer le tronçon de goulotte 20 suivant l'axe A2', dans un sens uniquement.

Ainsi, lorsque le tronçon de goulotte 20 est engagé entre deux accessoires de connexion 200, les trottoirs 219 formés sur ces deux accessoires de connexion 200 permettent de bloquer le tronçon de goulotte 20 suivant l'axe A2', dans les deux sens.

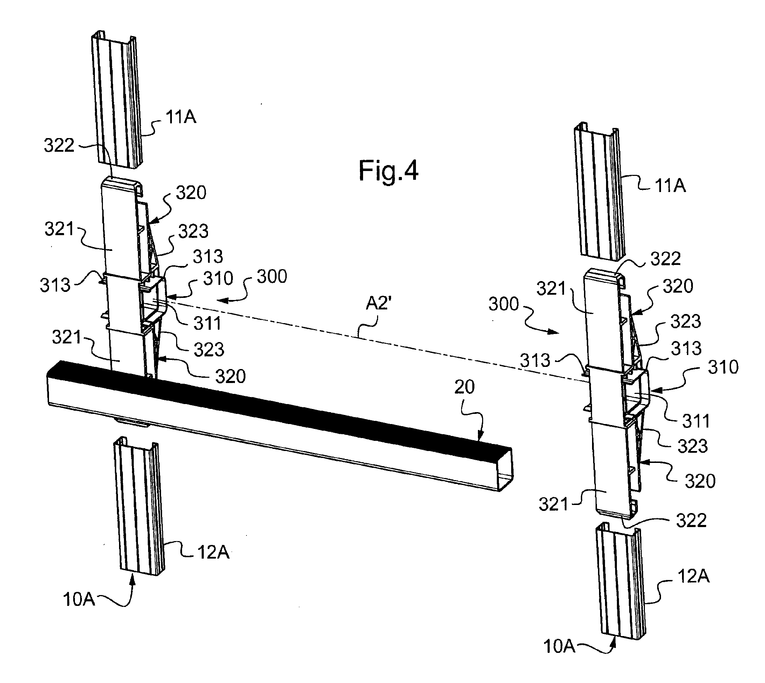

Sur les figures 4 à 6, on a représenté un troisième mode de réalisation de l'accessoire de connexion 300.

L'accessoire de connexion 300 est ici également formé d'une seule pièce monobloc.

Dans ce mode de réalisation, l'accessoire de connexion 300 est agencé pour permettre le passage transversal d'éléments conducteurs logés dans des tronçons de goulotte 20 identiques à ceux représentés sur la figure 3.

La partie centrale 310 de l'accessoire de connexion 300 présente à cet effet une forme identique à celle de la partie centrale 210 de l'accessoire de connexion 200 représenté sur la figure 3. Elle délimite ainsi notamment un passage 311 dont le contour est fermé, et elle porte deux bords d'accostage 313 qui bordent les débouchés de ce passage 311 pour accueillir par l'avant les deux tronçons de goulotte 20.

L'accessoire de connexion 300 est en revanche agencé pour s'interposer entre deux tronçons 11A, 12A d'un montant métallique 10A différent de celui représenté sur les figures 1 et 2, en ce sens qu'il présente une section de forme amincie. Ses ailes présentent en effet une largeur inférieure à celle des ailes du montant vertical 10 représenté sur les figures 1 et 2. Ici, ce montant 10A est du type commercialisé sous la marque Placo® Stil®.

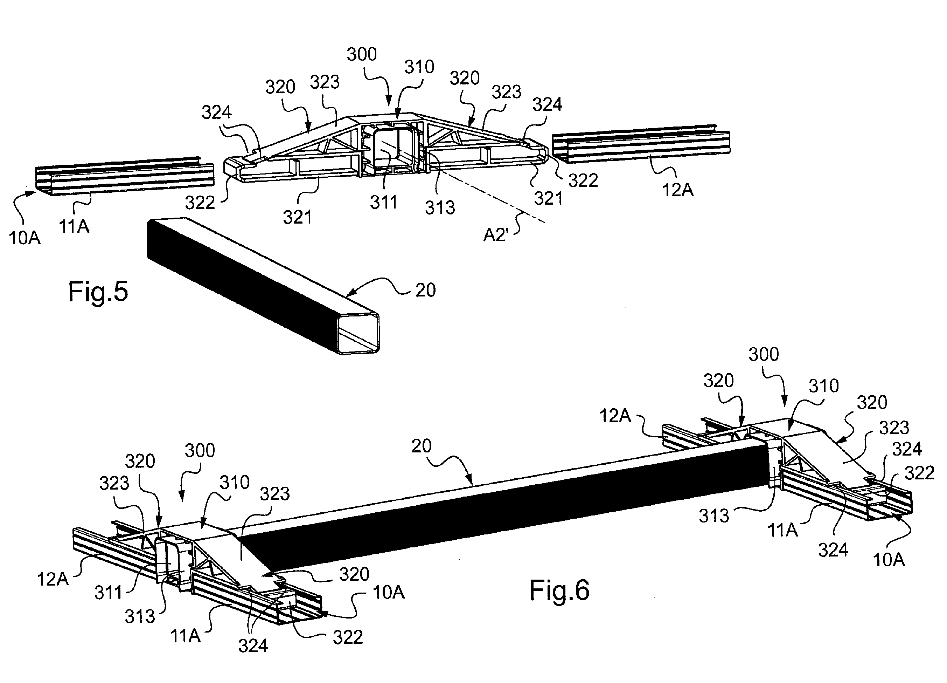

Comme le montrent bien les figures 5 et 6, ce montant 10A peut notamment être utilisé horizontalement de manière à former, avec d'autres montants identiques et avec des rails horizontaux, l'ossature métallique d'un faux-plafond.

Pour être engagées dans les deux tronçons 11A, 12A du montant 10A, les deux parties d'extrémité 320 de l'accessoire de connexion 300 présentent des formes différentes de celles des parties d'extrémité 120 de l'accessoire de connexion 100 représenté sur la figure 1.

Comme le montrent bien les figures 4 à 6, chacune des deux parties d'extrémité 320 comporte ainsi une poutre principale 321 globalement parallélépipédique, une extrémité libre 322 biseautée qui facilite l'engagement de la poutre principale 321 à l'intérieur du tronçon 11A, 12A correspondant du montant 10A, et un renfort latéral 323 qui épaule la poutre principale 321.

La poutre principale 321 présente une forme homologue de celle de la poutre principale 121 de l'accessoire de connexion 100 représenté sur la figure 1, à la différence près qu'elle présente une section transversale amincie, dont les dimensions sont égales, au jeu près, aux dimensions intérieures de la section transversale des tronçons 11A, 12A du montant 10A. Cette poutre principale 321 s'élève donc à partir d'une partie seulement de la face externe de la paroi correspondante de la partie centrale 310 de l'accessoire de connexion 300.

L'extrémité libre 322 biseautée de cette partie d'extrémité 320 présente également une forme homologue de celle de l'extrémité libre 122 de l'accessoire de connexion 100 représenté sur la figure 1, quoique plus amincie.

Le renfort latéral 323 s'étend quant à lui en longueur à partir de la partie restante de la face externe de la paroi correspondante de la partie centrale 310, le long d'un seul des côtés de la poutre principale 321, jusqu'à l'extrémité libre 322. Il présente une section transversale à l'axe A2' en forme de triangle rectangle dont la base longe la partie centrale 310 et dont le sommet est tourné vers l'extrémité libre 322.

Il comporte plus précisément une paroi plane inclinée par rapport à la poutre principale 321 et des nervures de rigidification qui relient cette paroi plane à la poutre principale 321.

Comme le montrent les figures 5 et 6, ce renfort latéral 323 délimite, avec la poutre principale 321, deux rainures 324 ouvertes à l'opposé l'une de l'autre dans lesquelles peuvent coulisser les bords repliés des ailes des tronçons 11A, 12A du montant vertical 10A.

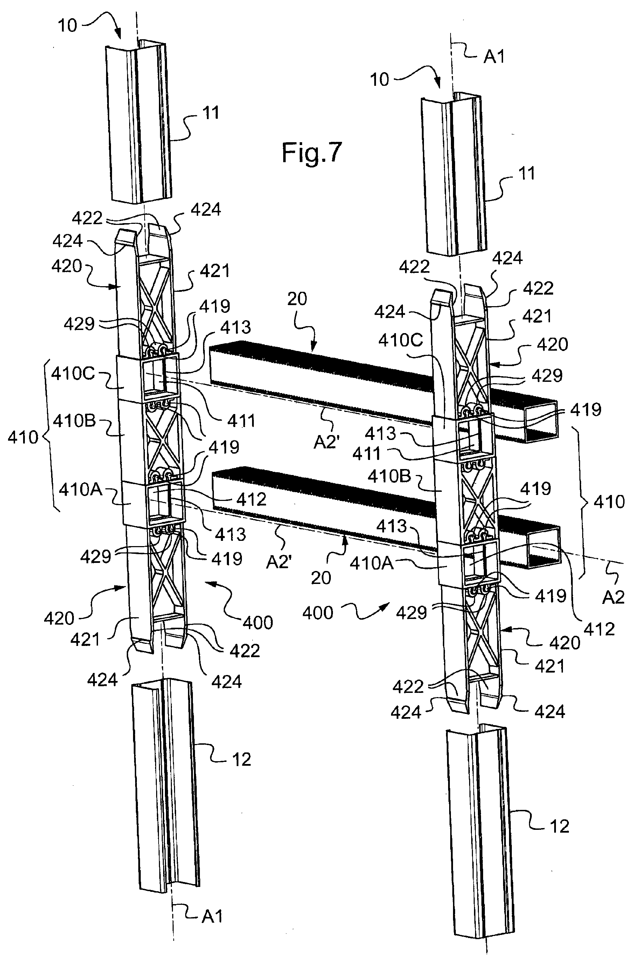

Sur la figure 7, on a représenté un quatrième mode de réalisation de l'accessoire de connexion 400.

Dans ce mode de réalisation, l'accessoire de connexion 400 est agencé pour s'interposer entre deux tronçons 11, 12 d'un montant métallique 10 identique à celui représenté sur les figures 1 et 2 et pour permettre le passage transversal de goulottes 20 identiques à celle représentée sur les figures 1 et 2.

Ici, cet accessoire de connexion 400 est modulaire, en ce sens qu'il est formé de plusieurs éléments distincts équipés de moyens de montage 419, 429 complémentaires, ce qui permet de choisir le nombre d'éléments à assembler en fonction du nombre de passage que l'on souhaite établir dans le montant métallique 10.

Les parties d'extrémité 420 forment ainsi des éléments distincts de la partie centrale 410.

Ici, cette partie centrale 410 est elle-même composée de plusieurs éléments 410A, 410B, 410C, ici au nombre de trois.

Cette partie centrale 410 comporte ainsi deux bagues 410A, 410C identiques qui délimitent deux passages 411, 412 distincts pour les goulottes 20, et un élément de liaison 410B qui permet de connecter les bagues l'une à l'autre de telle manière que les bagues soient superposées entre les deux tronçons 11, 12 du montant vertical 10.

Chaque bague 410A, 410C présente ici une forme carrée, et comporte ainsi quatre parois planes.

Le passage 411, 412 délimité par chaque bague 410A, 410C présente une section carrée dont les dimensions sont identiques, au jeu près, aux dimensions extérieures de la section de la goulotte 20. De cette manière, les extrémités des goulottes 20 peuvent être engagées librement dans ces bagues 410A, 410C.

Chaque bague 410A, 410C présente toutefois, à mi-longueur du passage 411, 412, une butée intérieure formée par une nervure périphérique 413. Grâce à cette nervure périphérique 413, chaque tronçon de goulotte 20 peut être engagé par son extrémité dans le passage 411, 412 délimité par la bague 410A, 410C, mais se trouve bloqué suivant l'axe A2', dans un sens uniquement.

Ainsi, lorsque le tronçon de goulotte 20 en engagé entre deux accessoires de connexion 400, les nervures périphériques 413 formées dans ces deux accessoires de connexion 400 permettent de bloquer le tronçon de goulotte 20 suivant l'axe A2', dans les deux sens.

L'élément de liaison 410B présente une forme globalement parallélépipédique, et est allongé suivant l'axe A1. Il comporte deux parois latérales opposées pleines, raccordées l'une à l'autre par des nervures de rigidification en X, ainsi que deux parois d'extrémité pleines.

Pour son montage sur l'élément de liaison 410B, chaque bague 410A, 410C présente, en saillie des ses faces supérieure et inférieure, deux nervures 419 profilées d'axes parallèles à l'axe A2' et de sections transversales en forme de trous de serrure.

L'élément de liaison 410B présente en correspondance, en creux dans ses deux parois d'extrémité, deux rainures 429 profilées dans lesquelles peuvent coulisser les deux nervures 419.

Les dimensions de ces rainures 429 sont ajustées de telle sorte que les nervures 419 puissent y être engagées manuellement, mais qu'elles ne puisent en sortir librement sans qu'aucun effort extérieur ne soit exercé sur eux. Ces moyens de montage sont toutefois démontables.

Enfin, chacune des deux parties d'extrémité 420 de l'accessoire de connexion 400 comporte une poutre principale 421 globalement parallélépipédique, allongée suivant l'axe A1. Cette poutre principale 421 présente deux parois avant et arrière pleines, raccordées l'une à l'autre par des nervures de rigidification en X. Les deux autres parois latérales de cette poutre principale sont alors simplement formées par les tranches de ces nervures de rigidification. Les deux parois d'extrémité de cette poutre principale 421 sont également pleines.

Pour le montage de ces poutres principales 421 sur les bagues 410A, 410C, l'une de ces parois d'extrémité présente, en creux, deux rainures 429 profilées du type de celles que présente l'élément de liaison 410B de la partie centrale 410.

Pour assurer un bon maintien des tronçons 11, 12 du montant vertical 10 sur les parties d'extrémité 420 de l'accessoire de connexion 400, l'autre des parois d'extrémité de chaque poutre principale 421 porte deux pattes de flexion 422 parallèles à l'axe A1.

Ces deux pattes de flexion 422 s'étendent dans le prolongement des parois avant et arrière de la poutre principale 421, et sont élastiquement déformables en flexion l'une vers l'autre. Elles portent chacune une nervure 424 en saillie vers l'extérieur, qui permet de former un appui sur la face intérieure du tronçon 11, 12 du montant vertical 10 afin d'immobiliser au mieux ce tronçon 11, 12 sur l'accessoire de connexion 400.

Bien entendu, comme cela a été exposé précédemment, cet accessoire de connexion 400 est modulable, si bien qu'on pourrait prévoir de supprimer l'une des bagues ainsi que l'élément de liaison, pour ne passer qu'une seule goulotte au travers du montant vertical 10, ou on pourrait prévoir d'utiliser un nombre accru de bagues et d'éléments de liaison pour passer un plus grand nombre de goulottes au travers du montant vertical 10.

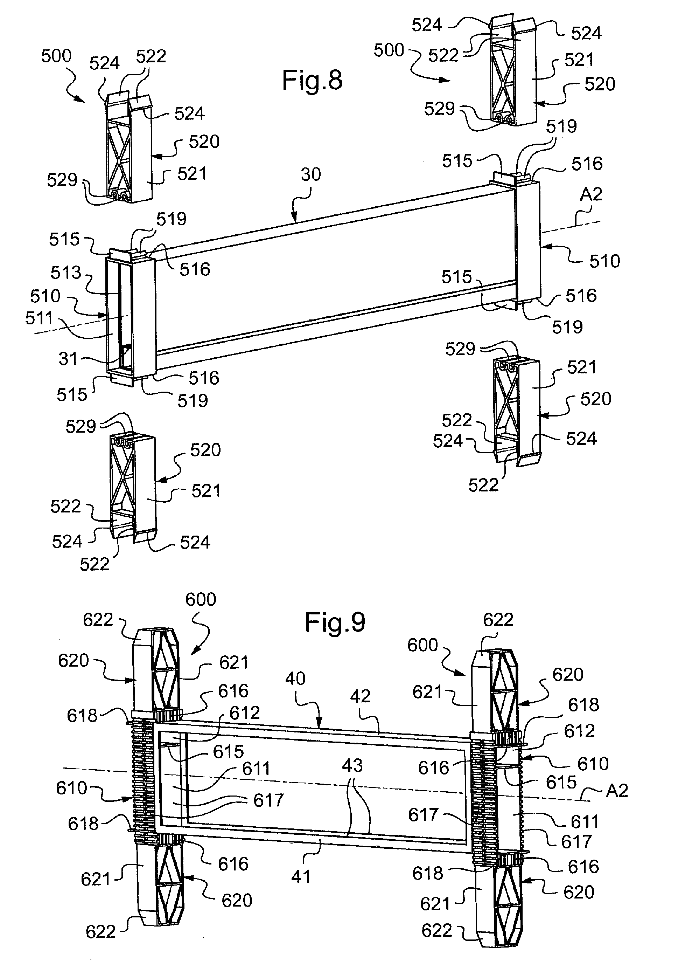

Sur la figure 8, on a représenté un cinquième mode de réalisation de l'accessoire de connexion 500.

Ici encore, cet accessoire de connexion 500 est modulaire, en ce sens qu'il est formé de plusieurs éléments distincts équipés de moyens de montage 519, 529 complémentaires, ici démontables.

Dans ce mode de réalisation, l'accessoire de connexion 500 est agencé pour s'interposer entre deux tronçons 11, 12 d'un montant métallique 10 identique à celui représenté sur les figures 1 et 2.

Il présente donc des parties d'extrémité 520 identiques à celles de l'accessoire de connexion 400 représenté sur la figure 7, avec notamment une poutre principale 521 dont une extrémité présente deux rainures 529 en creux et dont l'autre extrémité porte deux pattes de flexion 522 chacune équipée d'une nervure 524 en saillie vers l'extérieur.

Cet accessoire de connexion 500 est en revanche conçu pour permettre le passage d'éléments conducteurs logés dans une goulotte 30 différente de celle représentée sur les figures 1 et 2, et sensiblement plus grande que celle-ci.

Cette goulotte 30 se présente en effet ici sous la forme d'un profilé suivant l'axe A2, de section transversale rectangulaire, qui présente une largeur égale à la largeur de la goulotte 20 représentée sur les figues 1 et 2, mais une hauteur quatre fois supérieure à la hauteur de celle-ci.

Cette goulotte 30 présente une cloison interne 31 qui sépare longitudinalement l'intérieur de la goulotte 30 en deux zones distinctes, dont une zone inférieure de section carrée, et une zone supérieure de section rectangulaire. Cette cloison interne 31 est ici formée de languettes parallèles sécables ou défoncables.

La partie centrale 510 de l'accessoire de connexion 500 présente alors la forme d'une bague rectangulaire, afin de délimiter un passage 511 suivant l'axe A2 de section transversale rectangulaire, dont les dimensions sont identiques, au jeu près, aux dimensions extérieures de la section de la goulotte 30. De cette manière, l'extrémité de la goulotte 30 peut être librement engagée à l'intérieur de la partie centrale 510 de l'accessoire de connexion 500.

Cette partie centrale 510 présente toutefois, à mi-longueur du passage 511, une butée intérieure formée par une nervure périphérique 513 pour bloquer chaque tronçon de goulotte 20 suivant l'axe A2.

Les parois supérieure et inférieure 516 de cette partie centrale 510 portent chacune, en saillie de leurs faces externes, deux nervures 519 telles que celles portées par les bagues 410A, 410C représentées sur la figure 7, pour permettre de fixer les parties d'extrémité 520 à la partie centrale 510.

Ces parois supérieure et inférieure 516 portent par ailleurs chacune une paroi d'arrêt 515 qui s'élève à partir de leurs faces externes, orthogonalement à l'axe A2, à l'une des extrémités des nervures 519.

Ces parois d'arrêt 515 permettent de faciliter le montage de chaque partie d'extrémité 520 sur la partie centrale 510. En effet, lorsque l'installateur fait coulisser les rainures 529 de la partie d'extrémité 520 sur les nervures 519 de la partie centrale 510, ce coulissement arrive en butée lorsque la partie d'extrémité 520 est parfaitement alignée avec la partie centrale 510.

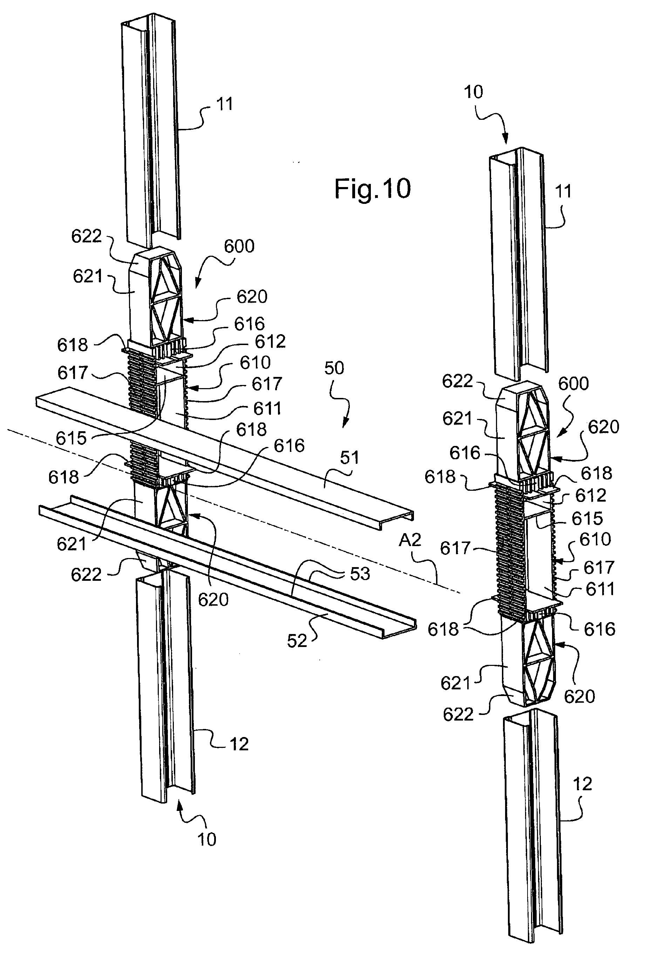

Sur les figures 9 et 10, on a représenté un sixième mode de réalisation de l'accessoire de connexion 600.

Dans ce mode de réalisation, l'accessoire de connexion 600 est formé d'une seule pièce monobloc et est agencé pour s'interposer entre deux tronçons 11, 12 d'un montant métallique 10 identique à celui représenté sur les figures 1 et 2.

Ses deux parties d'extrémité 620 présentent donc des formes identiques à celles des parties d'extrémité 120 de l'accessoire de connexion 100 représenté sur la figure 1, avec une poutre principale 621 globalement parallélépipédique, et une extrémité libre 622 en forme de pyramide tronquée.

L'accessoire de connexion 200 est par ailleurs agencé pour permettre le passage d'éléments conducteurs logés dans des conduits 40 ; 50 qui présentent des architectures différentes de celles des goulottes représentées sur les figures 1 et 8.

Le conduit 40 représenté sur la figure 9 se présente en effet sous la forme d'un profilé d'axe A2, de section transversale rectangulaire, qui comporte deux parois avant et arrière 41 ouvertes par de larges ouvertures 43, et deux parois supérieure et inférieure 42 pleines. Ici, les ouvertures 43 sont centrées sur les parois avant et arrière 41 et présentent des dimensions légèrement inférieures aux dimensions de ces parois avant et arrière 41, si bien qu'en pratique, chaque paroi avant et arrière 41 ne forme qu'un simple cadre.

Le conduit 50 représenté sur la figure 10 est quant à lui formé de deux pièces distinctes, à savoir deux profilés 51, 52 d'axes parallèles à l'axe A2 et de sections transversales en forme de U. Ces deux profilés 51, 52 sont conçus pour être positionnés l'un au dessus de l'autre, de manière à délimiter entre eux un passage pour les éléments conducteurs. Dans cette position, les bords des deux profilés 51, 52 définissent alors ensemble des ouvertures 53.

Ces deux types de conduits 40 ; 50 ne sont utilisables que dans les cloisons creuses dont les ossatures sont recouvertes sur leurs deux faces de panneaux de plâtre. En effet, ces panneaux de plâtre permettent alors de fermer les ouvertures 43, 53.

La partie centrale 610 de l'accessoire de connexion 600 présente alors une forme de bague rectangulaire, dont la section présente des dimensions sensiblement égales aux dimensions de la section du conduit de câble 40 représenté sur la figure 9.

Cette partie centrale 610 comporte ainsi deux parois supérieure et inférieure 616 carrées et parallèles, à partir desquelles s'élèvent les parties d'extrémité 620, et deux parois avant et arrière 617 parallèles dont les faces externes portent des nervures de rigidification.

La partie centrale 610 de l'accessoire de connexion 600 délimite ici deux passages 611, 612 pour les éléments conducteurs logés dans les conduits 40 ; 50. Elle comporte à cet effet une cloison intérieure longitudinale 615 qui s'étend parallèlement à ses parois supérieure et inférieure 616 et qui est située de telle manière que l'un des passages 612 présente une section transversale carrée tandis que l'autre passage 611 présente une section transversale rectangulaire.

Pour permettre d'assujettir le conduit 40 ; 50 sélectionné à l'accessoire de connexion 600, les parois supérieure et inférieure 616 de la partie centrale 610 se prolongent chacune de part et d'autre de l'accessoire de connexion 600 et forment ainsi quatre rebords plats 618.

Ces rebords plats 618 présentent des largeurs égales, au jeu près, à la largeur intérieure du conduit 40 représenté sur la figure 9 et à la distance entre les ailes de chaque profilé 51, 52 du conduit de câble 50 représenté sur la figure 10.

Les deux rebords plats 618 situés sur chaque côté de l'accessoire de connexion 600 sont par ailleurs écartés l'un de l'autre d'une distance sensiblement égale à la hauteur intérieure du conduit 40 représenté sur la figure 9.

De cette manière, le conduit 40 représenté sur la figure 9 peut être engagé par l'une de ses extrémités sur ces deux rebords plats 618, dans le prolongement des passages 611, 612.

Ainsi, lorsque le conduit 40 est engagé entre deux accessoires de connexion 600, il est rigidement bloqué en position par les rebords plats 618 de ces deux accessoires de connexion 600.

En revanche, lorsque le conduit 50 est du type de celui représenté sur la figure 10, les deux profilés 51, 52 doivent être fixés aux accessoires de connexion 600 par vissage, ou par collage ou encore par tout autre moyen ad hoc.

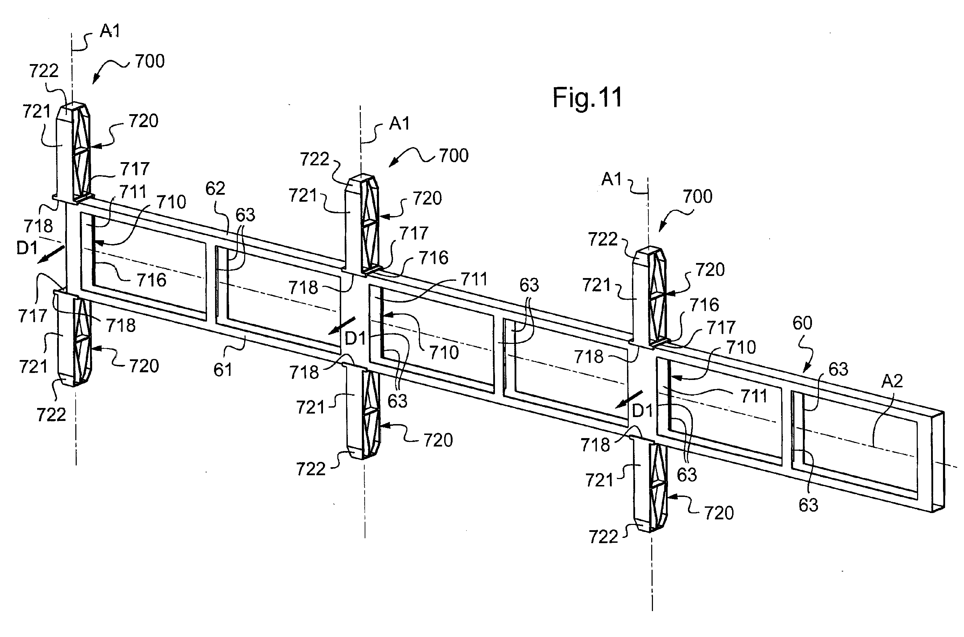

Sur la figure 11, on a représenté un septième mode de réalisation de l'accessoire de connexion 700.

Dans ce mode de réalisation, l'accessoire de connexion 700 est formé d'une seule pièce monobloc et est agencé pour s'interposer entre deux tronçons 11, 12 d'un montant métallique 10 identique à celui représenté sur les figures 1 et 2.

Ses deux parties d'extrémité 720 présentent donc des formes identiques à celles des parties d'extrémité 120 de l'accessoire de connexion 100 représenté sur la figure 1, avec une poutre principale 721 globalement parallélépipédique, et une extrémité libre 722 en forme de pyramide tronquée.

La partie centrale 710 de cet accessoire de connexion 700 est en revanche conçue pour être traversée par un conduit 60 d'un type particulier.

Ce conduit 60 se présente en effet sous la forme d'un profilé d'axe A2 de longueur importante (supérieure à 1 mètre), si bien qu'il est conçu pour traverser plusieurs montants verticaux 10 successifs. Il présente une section transversale rectangulaire et comporte ainsi deux parois avant et arrière 61 ouvertes par de larges ouvertures 63, et deux parois supérieure et inférieure 62 pleines.

Ici, il est prévu sur chaque paroi avant et arrière 61 une pluralité d'ouvertures 63 rectangulaires de dimensions identiques, à savoir de hauteurs légèrement inférieures aux hauteurs de ces parois avant et arrière 61 et de largeurs supérieures à leurs hauteurs. Ces ouvertures 63 sont séparées deux à deux par des branches des parois avant et arrière 61 de largeurs réduites.

Ici encore, ce type de conduits 60 n'est utilisable que dans les cloisons creuses dont les ossatures sont recouvertes sur leurs deux faces de panneaux de plâtre.

La partie centrale 710 de l'accessoire de connexion 700 est alors conçue pour coulisser sur le conduit 60, suivant l'axe A2.

Elle délimite à cet effet un unique passage 711 qui présente ici un contour ouvert dans une direction D1 orthogonale aux axes A1 et A2.

La partie centrale 710 présente plus précisément ici une forme de C, avec une paroi de fond 716 dont les bords supérieur et inférieur sont repliés à angle droit pour former deux parois supérieure et inférieure 717 carrées, les bords d'extrémité 718 de ces parois supérieure et inférieure 717 étant également repliés à angle droit, l'un vers l'autre.

Le passage 711 délimité par cette paroi de fond 716 et par ces parois supérieure et inférieure 717 présente une section transversale rectangulaire dont les dimensions sont égales, au jeu près, à celles de la section transversale du conduit 60. De cette manière, l'accessoire de connexion 700 peut librement coulisser le long du conduit 60, suivant l'axe A2.

Après avoir été placé à la position souhaitée sur le conduit 60, l'accessoire de connexion 700 peut éventuellement être rigidement fixé à celui-ci, par vissage au travers de sa paroi de fond 716 et de la paroi arrière 61 du conduit 60.

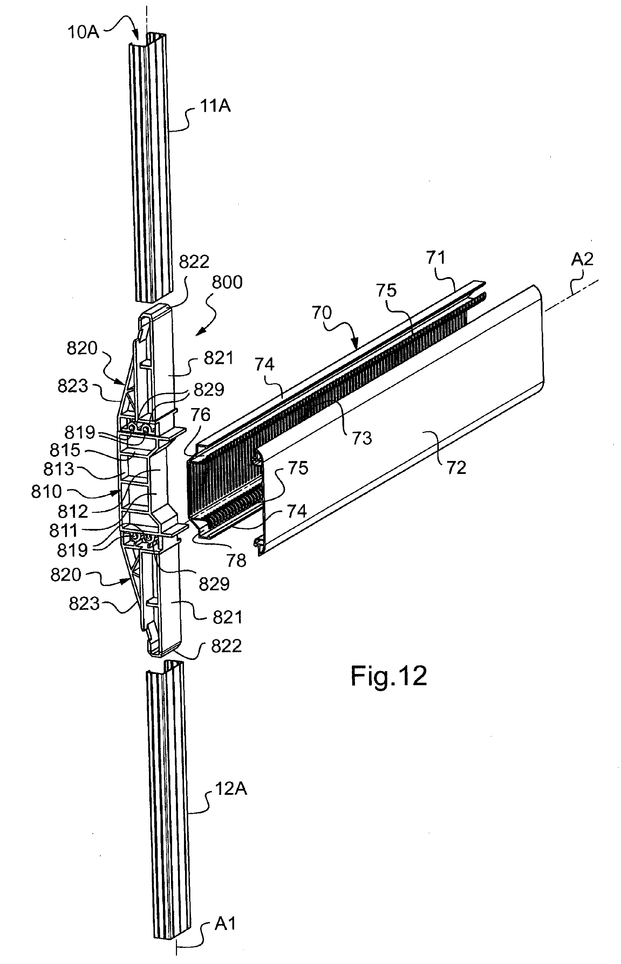

Sur la figure 12, on a représenté un huitième mode de réalisation de l'accessoire de connexion 800.

Dans ce mode de réalisation, l'accessoire de connexion 800 est prévu pour faire partie de l'ossature d'une cloison creuse ne comportant des panneaux en plâtre que sur une seule de ses deux faces.

Il est plus précisément agencé pour s'interposer entre deux tronçons 11A, 12A d'un montant métallique 10A identique à celui représenté sur les figures 4 à 6.

Ses deux parties d'extrémité 820 présentent donc des formes homologues de celles des parties d'extrémité 320 de l'accessoire de connexion 300 représenté sur la figure 4, avec une poutre principale 821 globalement parallélépipédique, une extrémité libre 822 en forme de pyramide tronquée, et un renfort latéral 823.

Elles diffèrent toutefois de celles-ci en ce qu'elles présentent des moyens de montage amovible sur la partie centrale 810. Ces moyens de montage sont identiques à ceux représentés sur la figure 7, en ce sens qu'ils comportent deux rainures 829 adaptées à accueillir deux nervures 819 prévues en correspondance sur la partie centrale 810.

La partie centrale 810 de l'accessoire de connexion 800 est quant à elle conçue pour délimiter un passage 811 dont le contour est ouvert vers l'avant afin de permettre d'y rapporter une goulotte partiellement en saillie 70.

Comme cela apparaît sur la figure 12, cette goulotte partiellement en saillie 70 comporte un socle 71 profilé suivant l'axe A2 et un couvercle 72 également profilé suivant cet axe A2.

Le socle 71 comporte un fond plat 73, deux ailes 74 qui s'élèvent à partir des bords du fond plat 73 et deux cloisons internes 75.

Le fond plat 73 est ouvert par une pluralité de fentes parallèles, qui s'étendent orthogonalement à l'axe A2 et qui délimitent entre elles des languettes défonçables.

Les ailes 74 sont composées de trois pans, dont :
- un premier pan qui borde le fond plat 73 et qui s'élève vers l'avant, à 45 degrés par rapport au fond plat 73,
- un second pan qui borde le premier pan et qui s'étend parallèlement au fond plat 73, et
- un troisième pan qui borde le second pan et qui s'étend vers l'avant, orthogonalement au fond plat 73.

Les troisièmes pans des deux ailes 74 portent sur leurs bords d'extrémité des griffes qui sont tournées l'une vers l'autre et qui sont adaptées à coopérer avec des griffes prévues en correspondance sur le couvercle 72, ce qui permet d'encliqueter le couvercle 72 sur le socle 71.

Les deux cloisons internes 75 s'élèvent à partir de l'arête de jonction entre le fond plat 73 et les ailes 74, orthogonalement au fond plat 73. Leurs bords d'extrémité sont repliés à angle droit dans des directions opposées pour délimiter avec les ailes 74 deux passages de câbles 76, 78. Ces bords d'extrémité sont ouverts par une pluralité de fentes parallèles, qui s'étendent orthogonalement à l'axe A2 et qui délimitent entre elles des languettes sécables.

Dans ce mode de réalisation, la partie centrale 810 de l'accessoire de connexion 800 est prévue pour accueillir latéralement le socle 71 de la goulotte partiellement en saillie 70.

Cette partie centrale 810 comporte une poutre principale 815 globalement parallélépipédique, qui est allongée suivant l'axe A1. Elle présente notamment deux parois avant 812 et arrière 813 opposées, raccordées l'une à l'autre par des nervures de rigidification. Elles présentent par ailleurs deux parois supérieure et inférieure qui portent les nervures 819 permettant de monter les parties d'extrémité 820 sur la partie centrale 810.

La paroi arrière 813 de cette partie centrale 810 est plane et s'étend parallèlement à l'axe A1.

La paroi avant 812 présente quant à elle une renfoncement pour délimiter un passage 811 pour le socle 71 de la goulotte partiellement en saillie 70.

Cette paroi avant 812 présente à cet effet une forme complémentaire de celle du fond plat 73 et des ailes 74 du socle 71 de la goulotte partiellement en saillie 70. Elle présente ainsi un fond plat et deux ailes chacune formées de trois pans.

La fixation du socle 71 de la goulotte partiellement en saillie 70 sur la partie centrale 810 de l'accessoire de connexion 800 est réalisée par vissage au travers des fonds plats du socle 71 de la goulotte partiellement en saillie 70 et de la paroi avant 812 de la partie centrale 810 de l'accessoire de connexion 800.

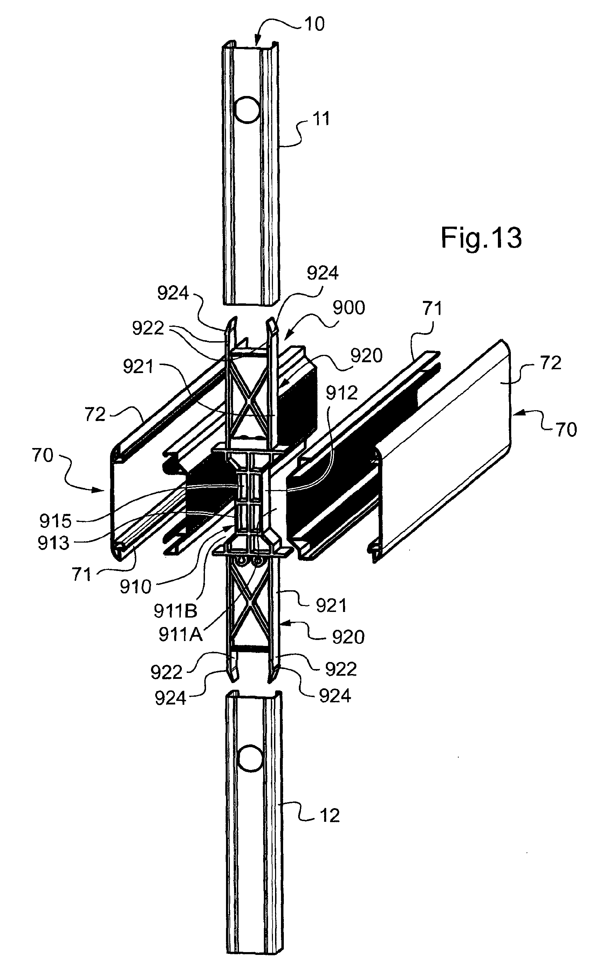

Sur la figure 13, on a représenté un neuvième mode de réalisation de l'accessoire de connexion 900.

Dans ce mode de réalisation, l'accessoire de connexion 900 est prévu pour être utilisé dans une cloison creuse comportant des panneaux en plâtre sur ses deux faces.

Il est plus précisément agencé pour s'interposer entre deux tronçons 11, 12 d'un montant métallique 10 identique à celui représenté sur la figure 7.

Il présente alors des parties d'extrémité 920 de formes homologues de celles des parties d'extrémité 420 de l'accessoire de connexion 400 représenté sur la figure 7, avec notamment une poutre principale 921 dont une extrémité porte deux pattes de flexion 922 chacune équipées d'une nervure 924.

Ces parties d'extrémité 920 diffèrent toutefois des parties d'extrémité 420 de l'accessoire de connexion 400 représenté sur la figure 7 en ce qu'elles sont dépourvues de moyens de montage amovible sur la partie centrale 910. Dans ce mode de réalisation, l'accessoire de connexion 900 est en effet réalisé d'une seule pièce monobloc.

La partie centrale 910 de l'accessoire de connexion 900 est quant à elle conçue pour délimiter deux passages 911A, 911B situés dos-à-dos, dont les contours sont respectivement ouverts vers l'avant et vers l'arrière de la cloison creuse. Cet accessoire de connexion 900 permet donc de fixer à la cloison creuse deux goulottes partiellement en saillie 70 identiques à celle représentée sur la figure 12, l'une parallèlement à l'autre, de telle manière que ces deux goulottes fassent respectivement saillie sur les deux faces de la cloison creuse.

La partie centrale 910 de l'accessoire de connexion 900 comporte à cet effet une poutre principale 915 globalement parallélépipédique, qui est allongée suivant l'axe A1 et qui présente notamment deux parois avant 912 et arrière 913 opposées, raccordées l'une à l'autre par des nervures de rigidification.

La paroi avant 912 est identique à la paroi avant 812 de l'accessoire de connexion 800 représenté sur la figure 12, si bien qu'elle présente un renfoncement pour délimiter un passage 911A pour le socle 71 de l'une des goulottes partiellement en saillie 70.

La paroi arrière 913 présente quant à elle une forme identique à celle de la paroi avant 912, de manière qu'elle présente également un renfoncement pour délimiter un passage 911B pour le socle 71 de l'autre des goulottes partiellement en saillie 70.

Sur la figure 14, on a représenté un dixième mode de réalisation de l'accessoire de connexion 1000.

Dans ce mode de réalisation, l'accessoire de connexion 1000 est agencé pour s'interposer entre deux tronçons 11B, 12B d'un montant 10B en bois de section carrée.

Cet accessoire de connexion 1000 est par ailleurs conçu pour permettre de passer un conduit de câbles 80 entre les deux tronçons 11B, 12B du montant 10B.

Ce conduit de câbles 80 se présente sous la forme d'un profilé d'axe A2, de section transversale en U. Il comporte une paroi de fond 81 et deux ailes latérales 82 qui s'élèvent à partir de deux bords opposés de la paroi de fond 81, orthogonalement à celle-ci. Ce conduit de câbles 80 est destiné à être fermé vers l'avant par les panneaux de plâtre de la cloison creuse.

L'accessoire de connexion 1000 est quant à lui obtenu à partir d'un feuillard métallique découpé en H de telle manière que les quatre branches du H présentent chacune une forme carrée de largeur égale à celle du montant 10B et de telle manière que la traverse du H présente une longueur égale à la largeur de la paroi de fond 81 du conduit de câbles 80.

L'accessoire de connexion 1000 est alors obtenu par pliage des quatre branches de ce feuillard métallique, à angle droit vers l'avant.

Ainsi, la partie centrale 1010 de cet accessoire de connexion 1000 est formée par la traverse du H du feuillard métallique. Les parties d'extrémité 1020 présentent quant à elles des sections en U, avec un fond et deux ailes 1022 adaptées à être positionnées contre deux faces externes opposées du tronçon 11B, 12B correspondant du montant 10B.

Les ailes 1022 des parties d'extrémité 1020 sont ici percées de cinq ouvertures en quinconce, pour permettre le passage de clous de fixation de l'accessoire de connexion 1000 sur les tronçons 11B, 12B du montant 10B.

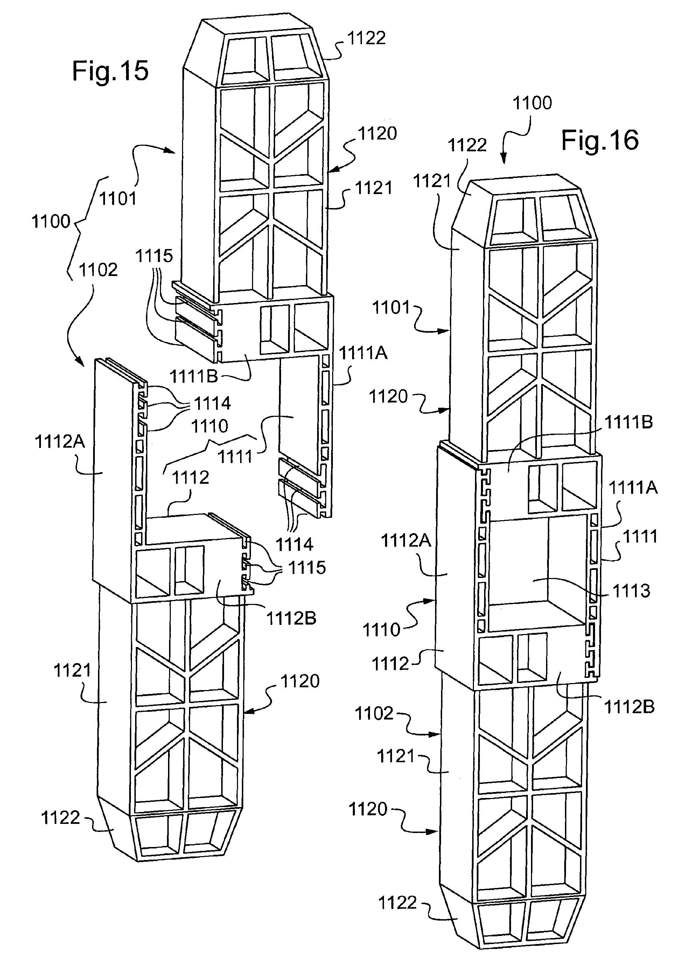

Sur les figures 15 et 16, on a représenté un onzième mode de réalisation de l'accessoire de connexion 1100.

Dans ce mode de réalisation, l'accessoire de connexion 1100 est agencé pour s'interposer entre deux tronçons 11, 12 d'un montant métallique 10 identique à celui représenté sur la figure 1.

Il présente alors des parties d'extrémité 1120 de formes homologues de celles des parties d'extrémité 120 de l'accessoire de connexion 100 représenté sur la figure 1, avec notamment une poutre principale 1121 et une extrémité libre 1122 tronquée.

En pratique, ce mode de réalisation de l'accessoire de connexion 1100 diffère des modes de réalisation précédents par la caractéristique selon laquelle la partie centrale 1110 et les deux parties d'extrémité 1120 sont formées par l'assemblage de deux pièces 1101, 1102 monoblocs.

Ces deux pièces 1101, 1102 présentent ici des formes identiques.

Elles comportent chacune deux parois en L, dont une paroi horizontale 1111 B, 1112B à partir d'une des faces de laquelle s'étend la partie d'extrémité 1120, et une paroi verticale 1111 A, 1112A.

Chacune de ces deux pièces 1101, 1102 est obtenue par moulage en matière plastique.

Elles sont chacune équipées de moyen d'assemblage complémentaires et amovibles 1114, 1115.

En l'espèce, ces moyens d'assemblage sont formés par des coulisseaux 1114 qui sont profilés suivant des axes parallèles et qui sont adaptés à coulisser dans des rails 1115 formés en creux.

Les coulisseaux 1114 sont ici situés en saillie sur le bord d'extrémité de chaque paroi horizontale 1111B, 1112B, à l'opposé des parois verticales 1111A, 1112A.

Les rails 1115 sont quant à eux formés en creux sur la face intérieure de chaque paroi verticale 1111A, 1112A, à distance des parois horizontales 1111B, 1112B.

Deux de ces coulisseaux 1114 présentent des sections transversales en forme de T, tandis que le troisième de ces coulisseaux 1114 présente une section transversale en forme de L.

Les rails 1115 formés en creux présentent des formes complémentaires.

Les dimensions de ces rails 1115 sont ajustées de telle sorte que les coulisseaux 1114 peuvent être engagés manuellement dans ces rails 1115, mais qu'ils ne peuvent en sortir librement sans qu'aucun effort extérieur ne soit exercé sur eux.

On pourrait d'ailleurs prévoir des moyens de blocage complémentaires qui permettent de bloquer le coulissement des coulisseaux dans les rails lorsque les deux parties de l'accessoire de connexion sont situés dans l'axe l'un de l'autre. De tels moyens de blocage pourraient notamment être formés par un ergot en saillie de l'un des coulisseaux, qui serait adapté à se loger dans une cavité prévue en creux dans le rail correspondant.

Une fois les deux parties 1101, 1102 de l'accessoire de connexion 1100 assemblées, la partie centrale 1110 est donc formée de deux parties 1111, 1112.

La présente invention n'est nullement limitée aux modes de réalisation décrits et représentés, mais l'homme du métier saura y apporter toute variante conforme à son esprit.

En particulier, on pourra prévoir que la partie centrale de l'accessoire de connexion soit formée par une goulotte (ou un conduit). Dans cette variante, la goulotte comprendra, localement sur sa face externe, des moyens d'assujettissement des deux parties d'extrémité dudit accessoire de connexion. De cette manière, une fois rapportées sur la goulotte, ces parties d'extrémité s'étendront orthogonalement à l'axe longitudinal de la goulotte.

On pourra d'ailleurs prévoir que la goulotte comprenne localement sur sa face externe, à intervalles réguliers le long de sa longueur, des moyens d'assujettissement des plusieurs paires de parties d'extrémité. De cette manière, cet accessoire de connexion pourra s'interposer entre plusieurs paires de tronçons de montants verticaux.

## Revendications

1. Accessoire de connexion (100 ; 200 ; 300 ; 400 ; 500 ; 600 ; 700 ; 800 ; 900 ; 1000 ; 1100) de deux tronçons (11, 12 ; 11A, 12A ; 11B ; 12B) d'un longeron (10 ; 10A ; 10B) d'une ossature de paroi creuse, comportant :
- une partie centrale (110; 210; 310; 410 ; 510; 610; 710 ; 810 ; 910; 1010 ; 1110) qui délimite au moins un passage (111 ; 211 ; 311 ; 411 ; 511 ; 611 ; 711 ; 811 ; 911A, 911B ; 1011 ; 1113) d'élément conducteur suivant un axe (A2')-, et
- deux parties d'extrémité (120 ; 220 ; 320 ; 420 ; 520 ; 620 ; 720 ; 820 ; 920 ; 1020 ; 1120) qui s'étendent de part et d'autre de la partie centrale (110 ; 210; 310; 410; 510; 610; 710; 810; 910; 1010; 1110) et qui sont respectivement adaptées à immobiliser les deux tronçons (11, 12 ; 11A, 12A 11B ; 12B) du longeron (10 ; 10A ; 10B) dans l'axe l'un de l'autre, cet axe étant transversal à l'axe (A2') dudit passage (111 ; 211 ; 311 ; 411 ; 511 ; 611 : 711 ; 811 : 911A, 911B: 1011 ; 1113).

2. Accessoire de connexion (100 ; 200 ; 300 ; 600 ; 700 ; 900 ; 1000) selon la revendication 1, dans lequel ladite partie centrale (110 ; 210 ; 310 ; 610 ; 710 ; 910 ; 1010) et lesdites deux parties d'extrémité (120 ; 220 ; 320 ; 620 ; 720 ; 920 ; 1020) sont formées d'une seule pièce monobloc.

3. Accessoire de connexion (400 ; 500 ; 800) selon la revendication 1, dans lequel lesdites deux parties d'extrémité (420 ; 520 ; 820) sont rapportées sur ladite partie centrale (410 ; 510 ; 810) par l'intermédiaire de moyens de montage (419, 429 ; 519, 529 ; 819, 829) complémentaires.

4. Accessoire de connexion (400 ; 500 ; 800) selon la revendication 3, dans lequel lesdits moyens de montage (419, 429 ; 519, 529 ; 819, 829) sont démontables.

5. Accessoire de connexion (1100) selon la revendication 1, dans lequel la partie centrale (1110) et les deux parties d'extrémité (1120) sont formées par l'assemblage de deux pièces monoblocs.

6. Accessoire de connexion (200 ; 300 ; 400 ; 500 ; 600) selon l'une des revendications 1 à 5, dans lequel chaque passage (211 ; 311 ; 411 ; 511 ; 611 ; 113) délimité par ladite partie centrale (210 ; 310 ; 410 ; 510 ; 610 ; 1110) présente un contour fermé.

7. Accessoire de connexion (200 ; 300 ; 400 ; 500 ; 600) selon la revendication 6, dans lequel ladite partie centrale (210 ; 310 ; 410 ; 510 ; 610) comporte des moyens d'assujettissement (213 ; 313 ; 618) de deux conduits (20 ; 30 ; 40) de cheminement d'éléments conducteurs dans le prolongement dudit passage (211 ; 311 ; 411 ; 511 ; 611).

8. Accessoire de connexion (100 ; 700 ; 800 ; 900 ; 1000) selon l'une des revendications 1 à 5, dans lequel chaque passage (111 ; 711 ; 811 ; 911A, 911B ; 1011) délimité par ladite partie centrale (110; 710 ; 810 ; 910 ; 1010) présente un contour ouvert dans une direction (D1) transversale à l'axe (A1) desdits tronçons (11, 12 ; 11A, 12A ; 11B, 12B) du longeron (10 ; 10A ; 10B).

9. Accessoire de connexion (100) selon la revendication 8, dans lequel il est prévu un capot (130) qui est équipé de moyens de fixation (134) sur la partie centrale (110) et qui est adapté à fermer le contour dudit passage (111).

10. Accessoire de connexion (600) selon l'une des revendications 1 à 9, dans lequel ladite partie centrale (610) délimite au moins deux passages (611, 612) qui sont superposés entre lesdites deux parties d'extrémité (620) et qui sont séparés l'un de l'autre par un élément de séparation (615).

11. Accessoire de connexion (900) selon l'une des revendications 1 à 9, dans lequel ladite partie centrale (910) délimite deux passages (911A, 911B) qui sont positionnés dos-à-dos et qui sont séparés l'un de l'autre par un élément de séparation (915).

12. Accessoire de connexion (1000) selon l'une des revendications 1 à 11, dans lequel chaque partie d'extrémité (1020) présente une section en U, avec deux ailes (1022) adaptées à être positionnées contre les faces externes du tronçon (11B, 12B) correspondant du longeron (10B).

13. Accessoire de connexion (100; 200 ; 300 ; 400 ; 500 ; 600 ; 700 ; 800 ; 900 ; 1100) selon l'une des revendications 1 à 11, dans lequel chaque partie d'extrémité comporte une poutre principale (121 ; 221 ; 321 ; 421 ; 521 ; 621 ; 721 ; 821 ; 921 ; 1121) qui délimite une enveloppe extérieure globalement parallélépipédique et qui est adaptée à être engagée à l'intérieur du tronçon (11, 12 ; 11A, 12A) correspondant du longeron (10 ; 10A).

14. Accessoire de connexion (300 ; 800) selon la revendication 13, dans lequel chaque partie d'extrémité (320 ; 820) comporte un renfort latéral (323 ; 823) qui épaule la poutre principale (321 ; 821) et qui délimite, avec la poutre principale (321 ; 821), deux rainures (324 ; 824) ouvertes à l'opposé l'une de l'autre.

15. Accessoire de connexion (400 ; 500 ; 900) selon l'une des revendications 13 et 14, dans lequel ladite poutre principale (421 ; 521 ; 921) porte au moins une patte (422 ; 522 ; 922) élastiquement déformable en flexion, dont une partie (424 ; 524 ; 924) fait saillie de ladite enveloppe extérieure.

## Patentansprüche

1. Anschlusszubehör (100; 200; 300; 400; 500; 600; 700; 800; 900; 1000; 1100) für zwei Abschnitte (11; 12; 11A; 12A; 11B; 12B) eines Längsträgers (10; 10A; 10B) eines Hohlwandtragwerks, das umfasst:
- einen Mittelteil (110; 210; 310; 410; 510; 610; 710; 810; 910; 1010; 1110), das mindestens eine Durchführung (111; 211; 311; 411; 511; 611; 711; 811; 911A; 911B; 1011; 1113) für ein Leiterelement entlang einer Achse (A2') abgrenzt, und
- zwei Endteile (120; 220; 320; 420; 520; 620; 720; 820; 920; 1020; 1120), die sich auf beiden Seiten des Mittelteils (110; 210; 310; 410; 510; 610; 710; 810; 910; 1010; 1110) erstrecken und jeweils dazu geeignet sind, zwei Abschnitte (11, 12; 11A, 12A; 11B; 12B) des Längsträgers (10; 10A; 10B) in der Achse zueinander zu blockieren, wobei diese Achse quer zur Achse (A2') der Durchführung (111; 211; 311; 411; 511; 611; 711; 811; 911A; 911B; 1011; 1113) liegt.

2. Anschlusszubehör (100; 200; 300; 600; 700; 900; 1000) nach Anspruch 1, bei dem das Mittelteil (110; 210; 310; 610; 710; 910; 1010) und die zwei Endteile (120; 220; 320; 620; 720; 920; 1020) aus einem einzigen Einblockteil geformt sind.

3. Anschlusszubehör (400; 500; 800) nach Anspruch 1, bei dem die zwei Endteile (420; 520; 820) auf das Mittelteil (410; 510; 810) über komplementäre Montagemittel (419; 429; 519; 529; 819; 829) aufgesteckt sind.

4. Anschlusszubehör (400; 500; 800) nach Anspruch 3, bei dem die Montagemittel (419; 429; 519; 529; 819; 829) demontierbar sind.

5. Anschlusszubehör (1100) nach Anspruch 1, bei dem das Mittelteil (1110) und die zwei Endteile (1120) durch den Zusammenbau von zwei Einblockteilen geformt sind.

6. Anschlusszubehör (200; 300; 400; 500; 600) nach einem der Ansprüche 1 bis 5, bei dem jede, durch das Mittelteil (210; 310; 410; 510; 610; 1110) abgegrenzte Durchführung (211; 311; 411; 511; 611; 113) einen geschlossenen Umriss hat.

7. Anschlusszubehör (200; 300; 400; 500; 600) nach Anspruch 6, bei dem das Mittelteil (210; 310; 410; 510; 610) Mittel zur zwangsweisen Einbindung (213; 313; 618) von zwei Verlegungskanälen (20; 30; 40) für Leiterelemente in der Verlängerung dieser Durchführung (211; 311; 411; 511; 611) umfasst.

8. Anschlusszubehör (100; 700; 800; 900; 1000) nach einem der Ansprüche 1 bis 5, bei dem jede, durch das Mittelteil (110; 710; 810; 910; 1010) abgegrenzte Durchführung (111; 711; 811; 911A; 911B; 1011) einen, in einer zur Achse (A1) der Abschnitte (11; 12; 11A, 12A; 11B, 12B) des Längsträgers (10; 10A; 10B) queren Richtung (D1) offenen Umriss hat.

9. Anschlusszubehör (100) nach Anspruch 8, bei dem eine Abdeckung (130) vorgesehen ist, die am Mittelteil (110) mit Befestigungsmitteln (134) ausgestattet ist und sich dazu eignet, den Umriss der Durchführung (111) zu schließen.

10. Anschlusszubehör (600) nach einem der Ansprüche 1 bis 9, bei dem das Mittelteil (610) mindestens zwei Durchführungen (611, 612) abgrenzt, die zwischen den beiden Endteilen (620) übereinanderliegen und durch ein Trennelement (615) voneinander getrennt sind.

11. Anschlusszubehör (900) nach einem der Ansprüche 1 bis 9, bei dem das Mittelteil (910) zwei Durchführungen (911A, 911B) abgrenzt, die Rücken an Rücken positioniert und durch ein Trennelement (915) voneinander getrennt sind.

12. Anschlusszubehör (1000) nach einem der Ansprüche 1 bis 11, bei dem jedes Endteil (1020) einen U-förmigen Querschnitt mit zwei Flügeln (1022) aufweist, die sich dazu eignen, auf den Außenseiten des entsprechenden Abschnitts (11B; 12B) des Längsträgers (10B) positioniert zu werden.

13. Anschlusszubehör (100; 200; 300; 400; 500; 600; 700; 800; 900; 1100) nach einem der Ansprüche 1 bis 11, bei dem jedes Endteil einen Hauptbalken (121; 221; 321; 421; 521; 621; 721; 821; 921; 1121) umfasst, der einen im Allgemeinen parallelepipedförmigen Außenmantel abgrenzt und sich dazu eignet, ins Innere des entsprechenden Abschnitts (11, 12; 11A, 12A) des Längsträgers (10; 10A) eingesetzt zu werden.

14. Anschlusszubehör (300; 800) nach Anspruch 13, bei dem jedes Endteil (320; 820) eine Seitenverstärkung (323; 823) umfasst, die den Hauptbalken (321; 821) abstützt und mit dem Hauptbalken (321; 821) zwei gegenüberliegende, offene Rillen (324; 824) abgrenzt.

15. Anschlusszubehör (400; 500; 900) nach einem der Ansprüche 13 und 14, bei dem der Hauptbalken (421; 521; 921) mindestens eine elastisch biegsame und verformbare Lasche (422; 522; 922) trägt, von der ein Teil (424; 524; 924) von dem Außenmantel absteht.

## Claims

1. A connection accessory (100; 200; 300; 400; 500; 600; 700; 800; 900; 1000; 1100) for connecting two segments (11, 12; 11A, 12A; 11B; 12B) of an upright (10; 10A; 10B) of a hollow wall frame, said connection accessory comprising:
a central portion (110; 210; 310; 410; 510; 610; 710; 810; 910; 1010; 1110) that defines at least one passage (111; 211; 311; 411; 511; 611; 711; 811; 911A, 911B; 1011; 1113) for passing a conductor element along an axis (A2'); and
two end portions (120; 220; 320; 420; 520; 620; 720; 820; 920; 1020; 1120) that extend on either side of the central portion (110; 210; 310; 410; 510; 610; 710; 810; 910; 1010; 1110) and that are adapted to hold the two segments (11, 12; 11A, 12A; 11B; 12B) respectively of the upright (10; 10A; 10B) stationary relative to each other in axial alignment, their axis extending transversely relative to the axis (A2') of said passage (111; 211; 311; 411; 511; 611; 711; 811; 911A, 911B; 1011; 1113).

2. A connection accessory (100; 200; 300; 600; 700; 900; 1000) according to claim 1, wherein said central portion (110; 210; 310; 610; 710; 910; 1010) and said two end portions (120; 220; 320; 620; 720; 920; 1020) are formed as a single piece.

3. A connection accessory (400; 500; 800) according to claim 1, wherein said two end portions (420; 520; 820) are fitted on said central portion (410; 510; 810) by means of complementary mounting means (419, 429; 519, 529; 819, 829).

4. A connection accessory (400; 500; 800) according to claim 3, wherein said mounting means (419, 429; 519, 529; 819, 829) are separable.

5. A connection accessory (1100) according to claim 1, wherein the central portion (1110) and the two end portions (1120) are formed by assembling two single-piece parts together.

6. A connection accessory (200; 300; 400; 500; 600) according to any one of claims 1 to 5, wherein each passage (211; 311; 411; 511; 611; 1113) defined by said central portion (210; 310; 410; 510; 610; 1110) presents a closed outline.

7. A connection accessory (200; 300; 400; 500; 600) according to claim 6, wherein said central portion (210; 310; 410; 510; 610) includes securing means (213; 313; 618) for securing together two ducts (20; 30; 40) for passing conductor elements in line with said passage (211; 311; 411; 511; 611).

8. A connection accessory (100; 700; 800; 900; 1000) according to any one of claims 1 to 5, wherein each passage (111; 711; 811; 911A, 911B; 1011) defined by said central portion (110; 710; 810; 910; 1010) presents an open outline in a direction (D1) that is transverse relative to the axis (A1) of said segments (11, 12; 11A, 12A; 11B, 12B) of the upright (10; 10A; 10B).

9. A connection accessory (100) according to claim 8, wherein a cover (130) is provided that is fitted with fastener means (134) for fastening on the central portion (110) and that is adapted to close the outline of said passage (111).

10. A connection accessory (600) according to any one of claims 1 to 9, wherein said central portion (610) defines at least two passages (611, 612) that are superposed between said two end portions (620) and that are separated from each other by a separator element (615).

11. A connection accessory (900) according to any one of claims 1 to 9, wherein said central portion (910) defines two passages (911A, 911B) that are positioned back to back and that are separated from each other by a separator element (915).

12. A connection accessory (1000) according to any one of claims 1 to 11, wherein each end portion (1020) presents a channel section with two flanges (1022) that are adapted to be positioned against the outer faces of the corresponding segment (11B, 12B) of the upright (10B).

13. A connection accessory (100; 200; 300; 400; 500; 600; 700; 800; 900; 1100) according to any one of claims 1 to 11, wherein each end portion includes a main beam (121; 221; 321; 421; 521; 621; 721; 821; 921; 1121) that defines an outer shell that is generally rectangular and that is adapted to be engaged inside the corresponding segment (11, 12; 11A, 12A) of the upright (10; 10A).

14. A connection accessory (300; 800) according to claim 13, wherein each end portion (320; 820) includes side reinforcement (323; 823) that shoulders the main beam (321; 821) and that co-operates with the main beam (321; 821) to define two open grooves (324; 824) .

15. A connection accessory (400; 500; 900) according to claim 13 or claim 14, wherein said main beam (421; 521; 921) carries at least one tab (422; 522; 922) that is elastically deformable in bending, having a portion (424; 524; 924) that projects from said outer shell.
